# EUROPÄISCHE PATENTSCHRIFT

(11) **EP 3 891 330 B1**
(45) Veröffentlichungstag und Bekanntmachung des Hinweises auf die Patenterteilung: **25.11.2026**
(21) Anmeldenummer: 19780225.9
(22) Anmeldetag: 30.09.2019
(51) Int. Cl.: D06F 39/00, A47L 15/42, A47L 15/46

(54) **SYSTEM MIT EINEM WASSERFÜHRENDEN HAUSHALTSGERÄT UND VERFAHREN ZUM BETREIBEN EINES WASSERFÜHRENDEN HAUSHALTSGERÄTS**
SYSTEM HAVING A WATER-BEARING DOMESTIC APPLIANCE AND METHOD FOR OPERATING A WATER-BEARING DOMESTIC APPLIANCE
SYSTÈME COMPRENANT UN APPAREIL MÉNAGER À CIRCULATION D'EAU ET PROCÉDÉ POUR FAIRE FONCTIONNER UN APPAREIL MÉNAGER À CIRCULATION D'EAU

(30) Priorität: 06.12.2018 DE 102018221163
(43) Veröffentlichungstag der Anmeldung: 13.10.2021
(73) Patentinhaber: BSH Hausgeräte GmbH, 81739 München (DE)
(72) Erfinder: MILLER, Daniel, 89435 Finningen (DE); PAINTNER, Kai, 86465 Welden (DE); ROMMEL, Alexander, 89431 Bächingen (DE); SCHECK, Katharina, 89407 Dillingen (DE); RIEHL, Helena, 81669 München (DE); MEYER, Manuel, 80335 München (DE); HECKES, Matthias, 81377 München (DE); HÜDIG, Matthias, 86157 Augsburg (DE)
(86) Internationale Anmeldenummer: PCT/EP2019/076373
(87) Internationale Veröffentlichungsnummer: WO 2020/114640

(56) Entgegenhaltungen:
- EP-A1- 2 837 724
- WO-A1-2007/011280
- WO-A1-2008/103127
- WO-A1-2011/006824
- WO-A1-2015/016708
- DE-A1- 102017 117 889
- DE-A1- 19 957 248

## Beschreibung

Die vorliegende Erfindung betrifft ein System mit einer Geschirrspülmaschine, wie beispielsweise einer Haushaltsgeschirrspülmaschine, sowie ein Verfahren zum Betreiben einer Geschirrspülmaschine.

Herkömmliche wasserführende Haushaltsgeräte, wie beispielsweise Geschirrspülmaschinen, weisen verschiedene Automatikfunktionen auf, die den Betrieb der Geschirrspülmaschine für einen Benutzer erleichtern sollen. Dazu gehört beispielsweise eine Programmautomatik, die in Abhängigkeit von verschiedenen Faktoren, wie beispielsweise einer Schmutzfracht in einer Spülflotte, bestimmte durch den Benutzer getätigte Voreinstellungen und dergleichen, ein Reinigungsergebnis optimieren soll.

Hierzu zeigt das Dokument DE 196 51 346 A1 eine Geschirrspülmaschine mit einer Steuereinrichtung, bei der eine vollständige Anpassung des Programmablaufs an die unterschiedlichsten Verschmutzungsgrade des zu reinigenden Geschirrs ermöglicht wird. Dabei ist der Programmablauf mittels wenigstens eines im Wesentlichen stufenlos einstellbaren, für den Spülvorgang notwendigen und durch ihn beeinflussten Parameter an der Steuereinrichtung vorwählbar.

Das Dokument WO 2011 / 006 824 A1 zeigt ein Verfahren zum Unterstützen einer Bedienperson beim Festlegen von Parametern eines Prozesses eines Haushaltsgeräts durch Vornahme von Eingaben an einer Bedieneinrichtung, wobei die Eingaben durch eine Steuereinrichtung empfangen werden, mit den Schritten:
- Empfangen einer Eingabe durch die Steuereinrichtung, über die zumindest ein erster Parameter des Prozesses festgelegt wird,
- Ermitteln jeweils eines Wertes für eine einen zugeordneten Ressourcenverbrauch wiedergebende Größe durch die Steuereinrichtung für eine Mehrzahl von möglichen, unter Berücksichtigung der Eingabe ausgewählten Varianten des Prozesses, die sich jeweils in dem ersten Parameter und/oder in zumindest einem weiteren Parameter voneinander unterscheiden, und
- Ausgeben des jeweiligen Wertes der Größe für die gesamte Mehrzahl von möglichen Varianten durch die Steuereinrichtung, wobei die Werte mittels einer Anzeigeeinrichtung des Haushaltsgeräts angezeigt werden.

Das Dokument WO 2015 / 016 708 A1 zeigt eine Getränkebereitstellungsvorrichtung, aufweisend eine Bereitstellungseinheit zum Bereitstellen eines Getränks, wobei die Bereitstellungseinheit angeordnet ist zum gesteuerten Mischen einer Mehrzahl von Zutaten, die in das Getränk einbringbar sind, und eine Steuerungseinheit, um dem Benutzer ein Steuern der Bereitstellungseinheit zu ermöglichen, wobei die Steuerungseinheit aufweist:
- eine graphische Benutzerschnittstelle, um einem Benutzer zu ermöglichen, eine Formulierung für das bereitzustellende Getränk entsprechend zumindest einem ersten und einem zweiten Parameter zu spezifizieren, und um visuell beobachtbare Reaktionen auf durch den Benutzer bereitgestellte Vorgaben bereitzustellen, wobei die graphische Benutzerschnittstelle eine Betriebsmodus hat, der dem Benutzer ermöglicht, eine Position in einem zumindest zweidimensionalen Raum anzugeben, und wobei ein jeweiliger Wert dieses zumindest einen ersten und einen zweiten Parameters in Übereinstimmung mit jeweiligen Komponenten der angegebenen Position in jeweiligen Richtungen dieses Auswahlraums eingestellt wird, wobei der jeweilige Wert dieses zumindest einen ersten und zweiten Parameters von den Komponenten dieser Position in diesen jeweiligen Richtungen in einer monotonen Weise abhängt,
- eine Verarbeitungseinheit zum Antreiben der Bereitstellungseinheit in Übereinstimmung mit der durch den Benutzer spezifizierten Formulierung.

Das Dokument WO 2008 / 103 127 A1 zeigt eine Geschirrspül- oder Waschmaschine, aufweisend eine elektrische Betriebssteuerungseinheit, eine Speichereinheit, die mit der Steuerungseinheit verbunden ist und Waschprogramme / Spülprogramme enthält, die jeweils eine bestimmte Laufzeit haben, wobei die Maschine aus ein Benutzersteuerungspaneel hat, das mit der Betriebssteuerungseinheit verbunden ist, wobei das Paneel ein Auswahlmittel zum Einstellen des maschinenbetriebs durch einen Verwender und Anzeigemittel zum Anzeigen dieser Einstellungen hat, wobei die Auswahlmittel Zeiteinstellmittel haben, welche die Fähigkeit zum Einstellen einer bestimmten Laufzeit von einer Anzahl zulässiger Laufzeiten bereitstellen, wobei die Laufzeit an dem Anzeigemittel angezeigt wird, wobei die Speichereinheit ein separates Waschprogramm / Spülprogramm für jede der zulässigen Laufzeiten enthält, wobei die Betriebssteuerungseinheit Mittel zum Aktivieren eines Waschprogramms / Spülprogramms hat, das der eingestellten Laufzeit entspricht.

Das Dokument EP 2 837 724 A1 zeigt eine Waschmaschine, aufweisend eine Benutzerschnittstelle und eine Steuerungseinheit, wobei die Benutzerschnittstelle:
- durch einen Benutzer bedienbar ist, um die Waschmaschine ein und aus zu schalten, und um Betriebseinstellungen der Waschmaschine unter mehreren vordefinierten Benutzer-wählbaren Betriebseinstellungen auszuwählen, und
- mehrere Lichtindikatoren aufweist, die jeweils mit einer entsprechenden vordefinierten Benutzer-wählbaren Betriebseinstellung verknüpft ist;
wobei die Steuerungseinheit dazu eingerichtet ist, einen Lichtindikator einzuschalten, falls die entsprechende vordefinierte Benutzer-wählbare Betriebseinstellung ausgewählt wird, die mit dem Lichtindikator verknüpft ist; wobei die Steuerungseinheit ferner dazu konfiguriert ist, eine Anlaufprozedur auszuführen, in welcher auf das Einschalten der Waschmaschine durch einen Benutzer hin alle Lichtindikatoren eingeschaltet werden.

Das Dokument DE 199 57 248 A1 zeigt eine Geschirrspülmaschine mit einer elektronischen Programmsteuerung, in der innerhalb eines Speichers mehrere Spülprogramme gespeichert sind, und mit einer Bedienblende, die Bedienelemente zum Einstellen eines Programmablaufes umfasst, wobei eine maximale Soll-Programmlaufzeit für jeden zu startenden Spülvorgang einstellbar ist, wobei ein Zeitmessgerät zur Überwachung des Programmablaufes umfasst ist, und wobei zu jedem gespeicherten Spülprogramm eine minimale und eine maximale Programmlaufzeit gespeichert sind, mit denen die eingestellte Programmlaufzeit vergleichbar ist.

Vor diesem Hintergrund besteht eine Aufgabe der vorliegenden Erfindung darin, den Betrieb einer Haushaltsgeschirrspülmaschine weiter zu verbessern.

Gemäß einem ersten Aspekt wird ein System vorgeschlagen mit einer Geschirrspülmaschine, mit einer Steuerungsvorrichtung zum Durchführen eines Behandlungsprogramms aus einer Mehrzahl M von Behandlungsprogrammen, wobei jedes der Behandlungsprogramme durch eine Anzahl von Programm-Parametern bestimmt ist, einer Speichereinrichtung zum Speichern der M Behandlungsprogramme in Form einer N-dimensionalen Matrix, wobei einem jeden Matrixelement der Matrix eines der M Behandlungsprogramme zugeordnet ist, wobei das jeweilige Matrixelement durch einen aus einer Mehrzahl von bestimmten N-dimensionalen Eingangsvektoren ermittelbar ist, einem Eingabemittel zum Erfassen einer Benutzereingabe zum Ändern zumindest eines der Programm-Parameter, einer Auswahl-Einheit zum Auswählen eines der bestimmten N-dimensionalen Eingangsvektoren in Abhängigkeit der erfassten Benutzereingabe, wobei die Anzahl der einstellbaren Programm-Parameter N ist, wobei der N-dimensionale Eingangsvektor N Vektorkomponenten aufweist, wobei die jeweilige Vektorkomponente des Eingangsvektors auf eine der N-Dimensionen der Matrix bezogen ist, und einer Ermittlungs-Einheit zum Ermitteln eines Matrixelements aus der Matrix mittels des ausgewählten Eingangsvektors, wobei die Matrix eine dreidimensionale (x×y×z)-Matrix ist, mit N = 3, wobei x, y und z diskrete Werte sind und die Anzahl M der Behandlungsprogramme einem Produkt aus x, y und z entspricht, wobei die Steuerungsvorrichtung dazu eingerichtet ist, das dem ermittelten Matrix-Element zugeordnete Behandlungsprogramm durchzuführen

Vorliegend wird die in der Geschirrspülmachine als wasserführenden Haushaltsgerät zur Verfügung stehende Prozesstechnik unter Berücksichtigung der individuellen Präferenzen des Benutzers optimal genutzt. Dabei kann der Benutzer durch seine Benutzereingabe zumindest einen der Programm-Parameter, welche das zu wählende Behandlungsprogramm bestimmen, ändern. Die Programm-Parameter umfassen zum Beispiel eine Reinigungs-Intensität, eine Trocknungs-Intensität und eine Programm-Dauer. In Abhängigkeit der erfassten Benutzereingabe zur Änderung der Programm-Parameter wird ein bestimmter Eingangsvektor der möglichen Eingangsvektoren ausgewählt. Mittels des ausgewählten Eingangsvektors wird dann wiederum dasjenige Matrixelement aus der Matrix zur Speicherung der Behandlungsprogramme ermittelt, welches dem ausgewählten Eingangsvektor zugeordnet ist. Durch das ermittelte Matrixelement ist ein bestimmtes der möglichen Behandlungsprogramme identifiziert und damit ermittelt. Dieses ermittelte Behandlungsprogramm kann dann von der Steuerungsvorrichtung ausgeführt werden. Die Zuordnung der Behandlungsprogramme auf die Matrixelemente der Matrix erfolgt in Abhängigkeit der verwendeten Programmparameter zur Abbildung des Benutzerwunsches gemäß Benutzereingabe und ist damit insbesondere sinnvoll gewählt. Wenn der Benutzer zum Beispiel eine Erhöhung der Reinigungs-Intensität wünscht, so hat das dem aktuellen Matrixelement in der Matrix nachgeordnete Matrixelement eine erhöhte Reinigungs-Intensität. Betrachtet man einen der Programmparameter, zum Beispiel die Reinigungs-Intensität, so sind die Matrixelemente in dieser Dimension der Matrix gemäß ihrer Intensität aufsteigend geordnet.

Für die weiteren Programmparameter gilt vorzugsweise entsprechendes.

Die Steuerungsvorrichtung kann hardwaretechnisch und/oder auch softwaretechnisch implementiert sein. Die Steuerungsvorrichtung ist insbesondere in der Geschirrspülmaschine als Haushaltsgerät integriert. Alternativ kann die Steuerungsvorrichtung auch außerhalb des Haushaltsgerätes angeordnet sein. Bei einer hardwaretechnischen Implementierung kann die Steuerungsvorrichtung zum Beispiel als Computer oder als Mikroprozessor ausgebildet sein. Bei einer softwaretechnischen Implementierung kann die Steuerungsvorrichtung als Computerprogrammprodukt, als eine Funktion, als eine Routine, als Teil eines Programmcodes oder als ausführbares Objekt ausgebildet sein.

Beispielsweise kann das Behandlungsprogramm ein Spülprogramm zum Spülen von Spülgut und/oder ein Reinigungsprogramm zum Reinigen von Teilen der Geschirrspülmaschine, beispielsweise eines Siebes, umfassen.

Die Steuerungsvorrichtung ist dazu eingerichtet, ein Spülprogramm aus einer Anzahl von Spülprogrammen zum Spülen des Spülguts durchzuführen. Ein Spülprogramm umfasst beispielsweise verschiedene Teilprogrammschritte, wie beispielsweise ein Vorspülen, ein Reinigen, ein Klarspülen und/oder ein Trocknen. Verschiedene Spülprogramme unterscheiden sich beispielsweise in einer Reihenfolge und/oder Art der Teilprogrammschritte, sowie in verschiedenen Betriebsparametern, wie beispielsweise einer Dauer und/oder Spülflottentemperatur eines oder mehrerer Teilprogrammschritte.

Spülgut wird zum Spülen mit der Haushaltsgeschirrspülmaschine in der Spülkammer, insbesondere auf einer oder mehreren Spülgutaufnahmen, angeordnet. Das Spülgut umfasst insbesondere verschiedenes Geschirr, Besteck und/oder Werkzeuge, welche der Zubereitung, der Lagerung und/oder dem Verzehr von Speisen dienen. Dies sind beispielsweise Teller, Töpfe, Tassen, Messer, Gläser und dergleichen mehr.

Gemäß einer Ausführungsform umfassen die durch den Benutzer einstellbaren Programm-Parameter eine Reinigungs-Intensität, eine Trocknungs-Intensität und/oder eine Programm-Dauer. Über das Eingabemittel kann der Benutzer die Reinigungs-Intensität, die Trocknungs-Intensität und die Programm-Dauer einstellen. In Abhängigkeit dieser Einstellung wird ein bestimmter Eingangsvektor der N Eingangsvektoren gewählt, ein entsprechendes Matrixelement ermittelt und das dem Matrixelement zugeordnete Behandlungsprogramm durchgeführt.

Wenn wie im obigen Beispiel drei Programmparameter, die Reinigungs-Intensität, die Trocknungs-Intensität und die Programm-Dauer, existieren, so hat der jeweilige Eingangsvektor auch drei Vektorkomponenten.

Wenn es beispielsweise für jeden der Programm-Parameter vier Einstellmöglichkeiten gibt, so ergeben sich mit M = 4*4*4 = 64 unterschiedliche Behandlungsprogramme und damit 64 unterschiedliche Eingangsvektoren, welche gewählt werden können.

Gemäß einer weiteren Ausführungsform bestimmt x einen Wertebereich einer ersten Vektorkomponente des Eingangsvektors, y bestimmt einen Wertebereich einer zweiten Vektorkomponente des Eingangsvektors und z bestimmt einen Wertebereich einer dritten Vektorkomponente des Eingangsvektors.

Gemäß einer weiteren Ausführungsform ist die Steuerungsvorrichtung dazu eingerichtet, bei einer von dem Eingabemittel erfassten Benutzereingabe zur Änderung eines der Programm-Parameter außerhalb des bestimmten Wertebereichs eine Maßnahme zu ermitteln und die Durchführung der ermittelten Maßnahme zu triggern. Wenn beispielsweise der Wertebereich für die Reinigungs-Intensität [1, 2, 3, 4] ist und der Benutzer über eine Spracheingabe den Wert 5 für die Reinigungs-Intensität nennt, so liegt seine Benutzereingabe außerhalb des bestimmten Wertebereiches von [1, 2, 3, 4]. Eine Maßnahme, welche die Steuerungsvorrichtung dann durchführen kann, kann sein, dass dem Benutzer Tipps oder Hinweise angezeigt werden, wie durch eigenes Eingreifen das gewünschte Ergebnis verbessert werden kann. Solche Hinweise können Wartung-Hinweise, Belade-Hinweise und Bedien-Hinweise umfassen. Beispiele für Wartungs-Hinweise sind Sieb-Reinigung, Sprüharm-Reinigung, Wechseln eines Reiniger-Typs und dergleichen. Belade-Hinweise umfassen Hinweise, wo das jeweilige Geschirr, insbesondere in welcher Spülgutaufnahme ein bestimmtes Geschirr, zu platzieren ist. Die Belade-Hinweise können auch Hinweise zur Trocknung umfassen, zum Beispiel Gefäße leicht schräg einzustellen. Des Weiteren können die Hinweise eine Erläuterung des Zusammenhangs zwischen Reinigungsleistung und Trocknungsleistung sowie Zeitbedarf umfassen. Des Weiteren können Hinweise hinsichtlich eines Fernstarts, zum Beispiel über ein Smartphone, oder eine Zeitvorwahl gegeben werden. Sollte ein weiteres negatives Feedback von dem Benutzer detektiert werden, so kann die Überprüfung des Gerätes durch einen Kundendienst empfohlen werden.

Gemäß einer weiteren Ausführungsform weist das Eingabemittel N haptische Eingabe-Einrichtungen auf. Dabei ist eine jeweilige der N haptischen Eingabe-Einrichtungen einem der N einstellbaren Programm-Parameter zugeordnet.

Gemäß einer weiteren Ausführungsform weist die jeweilige haptische Eingabe-Einrichtung einen Drehschalter, einen Drehregler oder einen Schieberegler auf.

Gemäß einer weiteren Ausführungsform ist das Eingabemittel dazu eingerichtet, ein Feedback des Benutzers nach Ablauf eines der Behandlungsprogramme zu erfassen und zumindest einen der Programm-Parameter in Abhängigkeit des erfassten Feedbacks zu ändern.

Gemäß einer weiteren Ausführungsform umfasst das Eingabemittel ein Sprachdialogsystem, welches dazu eingerichtet ist, das Feedback des Benutzers in Form von Sprach-Eingaben als Antworten des Benutzers auf von dem Sprachdialogsystem generierten Sprach-Ausgaben als Fragen zu erfassen. Beispielsweise kann der Benutzer über das Sprachdialogsystem gefragt werden: "Wollen Sie eine Erhöhung der Reinigungs-Intensität?". In Abhängigkeit der Antwort des Benutzers, kann der passende Eingabevektor gewählt werden.

Gemäß einer weiteren Ausführungsform umfasst das Eingabemittel ein berührungsempfindliches Display, welches dazu eingerichtet ist, das Feedback des Benutzers in Form von Display-Eingaben als Antworten des Benutzers auf von dem Display ausgegebenen Fragen zu erfassen. Beispielsweise kann auch über das berührungsempfindliche Display der Benutzer gefragt werden, ob er eine Erhöhung der Reinigungs-Intensität wünscht. Dem Benutzer können des Weiteren noch über das berührungsempfindliche Display zwei Eingabefelder bereitgestellt werden, einmal das Eingabefeld "Ja" und einmal das Eingabefeld mit "Nein". Betätigt dann der Benutzer das Eingabefeld "Ja", wird der Wert für die Reinigungs-Intensität für die Wahl des Eingabevektors inkrementiert. Wählt er aber das Eingabefeld "Nein", so wird kein Inkrementieren durchgeführt.

Gemäß einem weiteren Beispiel kann der Benutzer über das berührungsempfindliche Display gefragt werden, ob er mit der Trocknung des Spülguts zufrieden ist. Betätigt dann der Benutzer das Eingabefeld "Nein", wird der Wert für die Trocknungs-Intensität für die Wahl des Eingabevektors inkrementiert. Wählt er aber das Eingabefeld "Ja", so wird kein Inkrementieren durchgeführt.

Gemäß einer weiteren Ausführungsform integriert die Geschirrspülmaschine das Eingabemittel. Beispielsweise kann das Eingabemittel als berührungsempfindliches Display oder als eine Anzahl von Drehreglern ausgebildet sein und an der Außenseite der Tür angeordnet sein.

Gemäß einer weiteren Ausführungsform ist das Eingabemittel als eine auf einer externen Einrichtung installierbare App ausgebildet. Die externe Einrichtung ist insbesondere ein Mobilgerät. Das Mobilgerät ist beispielsweise ein Smartphone, ein Tablet oder ein Tablet-Computer. Die App kann auch als Applikation, Anwendungssoftware oder Anwendungsprogramm bezeichnet werden. Die App kann insbesondere als ein Programm, als ein Computerprogramm, als eine Software, als ein Computerprogrammprodukt, als eine Funktion, als eine Routine, als Teil eines Programmcodes oder als ausführbares Objekt ausgebildet sein.

Insbesondere umfasst die Geschirrspülmaschine eine Kommunikations-Einheit, die beispielsweise mittels eines Netzwerks mit der externen Einrichtung und damit mit der auf der externen Einrichtung installierten App koppelbar ist. Das Netzwerk umfasst dabei insbesondere ein Mobilfunknetzwerk, ein WLAN und/oder ein weiteres kabelloses oder kabelgebundenes Datennetzwerk.

Gemäß einem zweiten Aspekt wird ein Verfahren zum Betreiben einer Geschirrspülmaschine, mit einer Steuerungsvorrichtung zum Durchführen eines Behandlungsprogramms aus einer Mehrzahl M von Behandlungsprogrammen, wobei jedes der Behandlungsprogramme durch eine Anzahl von Programm-Parametern bestimmt ist, vorgeschlagen. Das Verfahren umfasst die folgenden Schritte:
Speichern der M Behandlungsprogramme in Form einer N-dimensionalen Matrix in einer Speichereinrichtung, wobei einem jeden Matrixelement der Matrix eines der M Behandlungsprogramme zugeordnet wird, wobei das jeweilige Matrixelement durch einen aus einer Mehrzahl von bestimmten N-dimensionalen Eingangsvektoren ermittelbar ist,
Erfassen einer Benutzereingabe zum Ändern zumindest eines der Programm-Parameter,
Auswählen eines der bestimmten N-dimensionalen Eingangsvektoren in Abhängigkeit der erfassten Benutzereingabe, wobei die Anzahl der einstellbaren Programm-Parameter N ist, wobei der N-dimensionale Eingangsvektor N Vektorkomponenten aufweist, wobei die jeweilige Vektorkomponente des Eingangsvektors auf eine der N-Dimensionen der Matrix bezogen ist,
Ermitteln eines Matrixelements aus der Matrix mittels des ausgewählten Eingangsvektors, wobei die Matrix eine dreidimensionale (x×y×z)-Matrix ist, mit N = 3, wobei x, y und z diskrete Werte sind und die Anzahl M der Behandlungsprogramme einem Produkt aus x, y und z entspricht, und
Durchführen des dem ermittelten Matrix-Element zugeordneten Behandlungsprogramms mittels der Steuerungsvorrichtung.

Die für das vorgeschlagene System beschriebenen Ausführungsformen und Merkmale gelten für das vorgeschlagene Verfahren entsprechend.

Gemäß einem dritten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht eines Ausführungsbeispiels eines Systems mit einer Haushaltsgeschirrspülmaschine;
Fig. 2 zeigt eine schematisierte Ansicht von Details des Ausführungsbeispiels der Haushaltsgeschirrspülmaschine nach Fig. 1;
Fig. 3 zeigt eine schematische Ansicht einer Matrix zur Speicherung von Behandlungsprogrammen für die Haushaltsgeschirrspülmaschine nach Fig. 1;
Fig. 4 zeigt eine schematische Ansicht eines Eingabemittels zum Erfassen von Benutzereingaben der Haushaltsgeschirrspülmaschine nach Fig. 1;
Fig. 5 zeigt eine schematische perspektivische Ansicht eines weiteren Ausführungsbeispiels eines Systems mit einer Haushaltsgeschirrspülmaschine; und
Fig. 6 zeigt ein schematisches Blockschaltbild eines Ausführungsbeispiels eines Verfahrens zum Betreiben einer Haushaltsgeschirrspülmaschine.

In den Figuren sind gleiche oder funktionsgleiche Elemente mit denselben Bezugszeichen versehen worden, sofern nichts anderes angegeben ist.

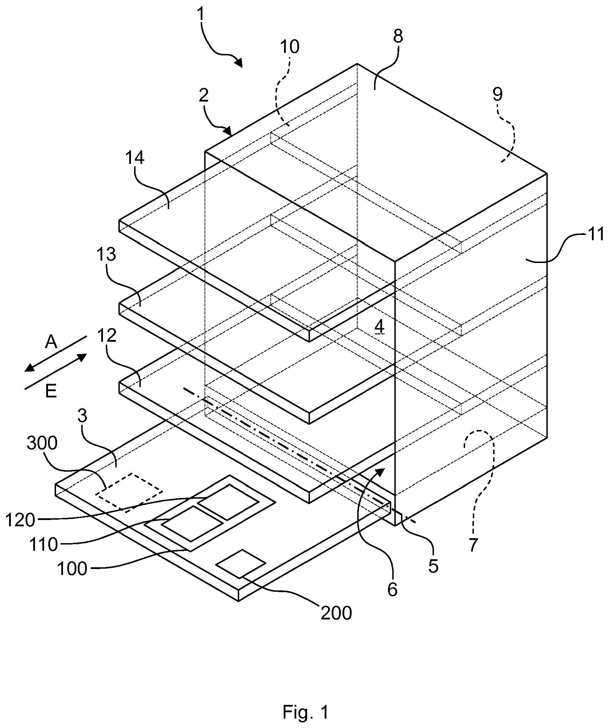

Ein erstes Ausführungsbeispiel des vorliegenden Systems mit einer Haushaltsgeschirrspülmaschine als Beispiel eines wasserführenden Haushaltsgeräts wird mit Bezug zu den Fig. 1 bis 4 erläutert.

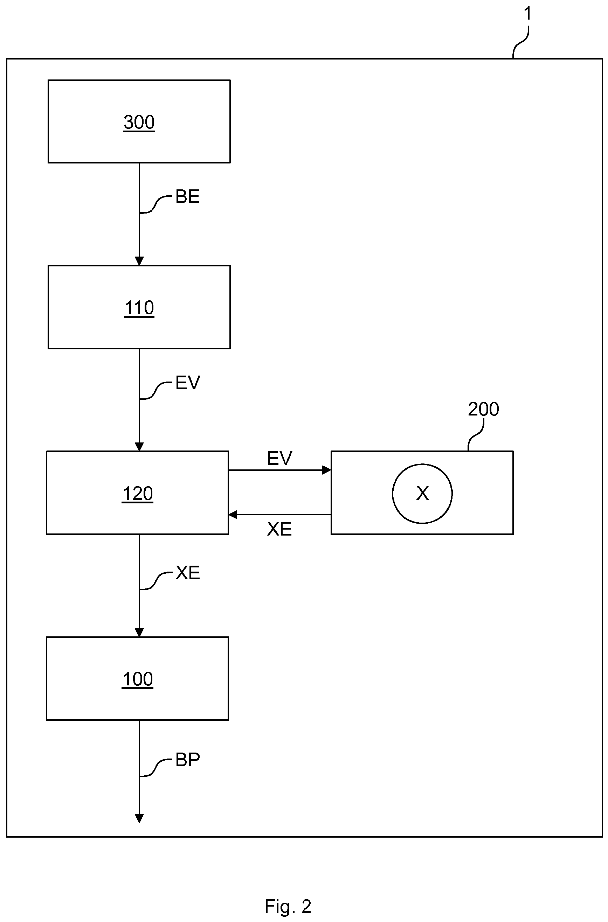

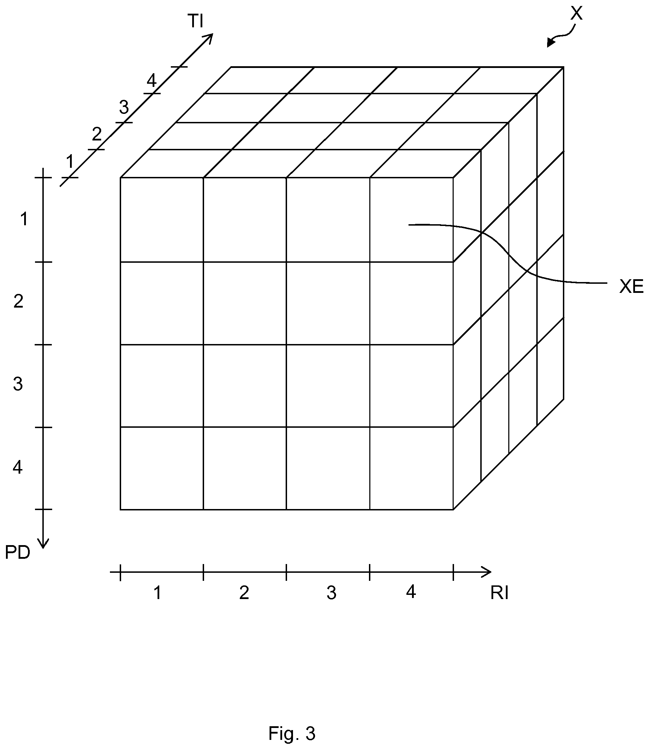

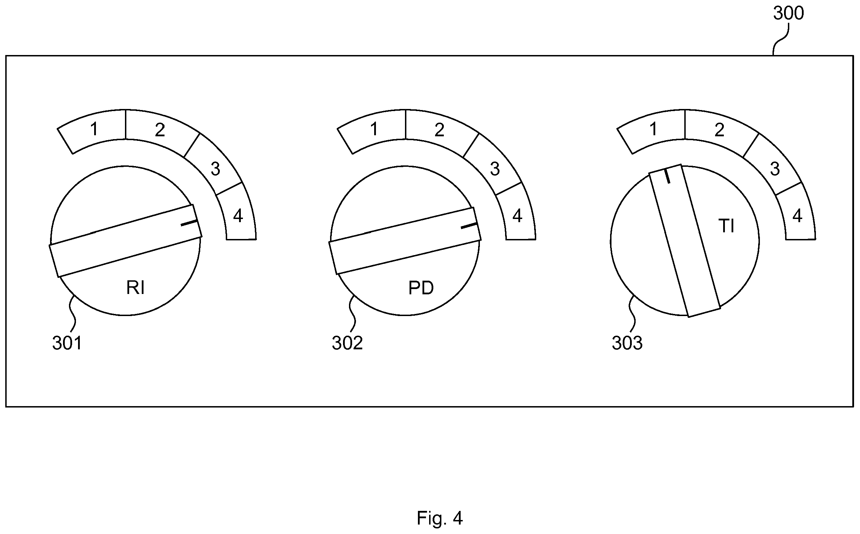

Hierzu zeigt die Fig. 1 eine schematische perspektivische Ansicht eines Ausführungsbeispiels einer Haushaltsgeschirrspülmaschine 1 als System. Die Fig. 2 zeigt eine schematisierte Ansicht von Details des Ausführungsbeispiels der Haushaltsgeschirrspülmaschine nach Fig. 1, die Fig. 3 zeigt eine schematische Ansicht einer Matrix X zur Speicherung von Behandlungsprogrammen BP für die Haushaltsgeschirrspülmaschine 1 nach Fig. 1 und die Fig. 4 zeigt eine schematische Ansicht eines Eingabemittels 300 zum Erfassen von Benutzereingaben BE der Haushaltsgeschirrspülmaschine 1 nach Fig. 1.

Die Haushaltsgeschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein (nicht dargestellt). Der Spülbehälter 2 ist vorzugsweise quaderförmig. Der Spülbehälter 2 kann in einem Gehäuse der Haushaltsgeschirrspülmaschine 1 angeordnet sein. Der Spülbehälter 2 und die Tür 3 können eine Spülkammer 4 zum Spülen von Spülgut 15 bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushaltsgeschirrspülmaschine 1 weist ferner zumindest eine Spülgutaufnahme 12, 13, 14 auf. Vorzugsweise können mehrere, beispielsweise drei, Spülgutaufnahmen 12, 13, 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12, 13, 14 übereinander in dem Spülbehälter 2 angeordnet. Jede Spülgutaufnahme 12, 13,14 ist wahlweise in den Spülbehälter 2 hinein- oder aus diesem herausverlagerbar. Insbesondere ist jede Spülgutaufnahme 12, 13, 14 in einer Einschubrichtung E in den Spülbehälter 2 hineinschiebbar und entgegen der Einschubrichtung E in einer Auszugsrichtung A aus dem Spülbehälter 2 herausziehbar.

Die Haushaltsgeschirrspülmaschine 1 weist zudem eine Steuerungsvorrichtung 100 auf, die an der Tür 3 angeordnet ist.

Die Steuerungsvorrichtung 100 der Fig. 1 ist dazu eingerichtet, ein Behandlungsprogramm BP aus einer Mehrzahl M von Behandlungsprogrammen BP (siehe Fig. 3) durchzuführen. Jedes der Behandlungsprogramme BP ist durch eine Anzahl von Programm-Parametern RI, TI, PD bestimmt. Beispiele für Programm-Parameter sind eine Reinigungs-Intensität RI, eine Trocknungs-Intensität TI und eine Programm-Dauer PD, welche der Benutzer einstellen kann.

Die Steuerungsvorrichtung 100 der Haushaltsgeschirrspülmaschine 1 der Fig. 1 umfasst eine Auswahl-Einheit 110 und eine Ermittlungs-Einheit 120. Die Haushaltsgeschirrspülmaschine 1 der Fig. 1 hat ferner eine Speichereinrichtung 200 sowie ein Eingabemittel 300 zum Erfassen von Benutzereingaben BE des Benutzers der Haushaltsgeschirrspülmaschine 1.

Die Speichereinrichtung 200 ist beispielsweise als ein RAM-Speicher, als ein EPROM-Speicher oder als ein EEPROM-Speicher ausgebildet. Die Speichereinrichtung 200 ist dazu eingerichtet, die M Behandlungsprogramme BP in Form einer N-dimensionalen Matrix X zu speichern. Für das Beispiel N = 3 zeigt die Fig. 3 ein Beispiel einer Matrix X zur Speicherung von 64 Behandlungsprogrammen für die Haushaltsgeschirrspülmaschine 1 nach Fig. 1. Die x-Achse der Fig. 3 zeigt die Reinigungs-Intensität RI, die y-Achse zeigt die Trocknungs-Intensität TI und die z-Achse zeigt die Programm-Dauer PD. Damit gibt es in dem Beispiel der Fig. 3 für jeden der Programm-Parameter RI, TI und PD vier Einstellmöglichkeiten und damit M = 4*4*4 = 64 unterschiedliche Behandlungsprogramme BP.

Die Matrix X der Fig. 3 hat 64 Matrixelemente XE, und jedem der Matrixelemente XE ist eines der 64 Behandlungsprogramme BP zugeordnet, insbesondere eineindeutig zugeordnet. Das jeweilige Matrixelement XE ist durch einen einer Mehrzahl von bestimmten N-dimensionalen Eingangsvektoren EV ermittelbar. Wie oben ausgeführt, ist N für das Beispiel der Fig. 1 bis 4 gleich 3 (N = 3).

Hierzu zeigt die Fig. 2 eine schematische Ansicht von Details des Ausführungsbeispiels der Haushaltsgeschirrspülmaschine 1 nach Fig. 1.

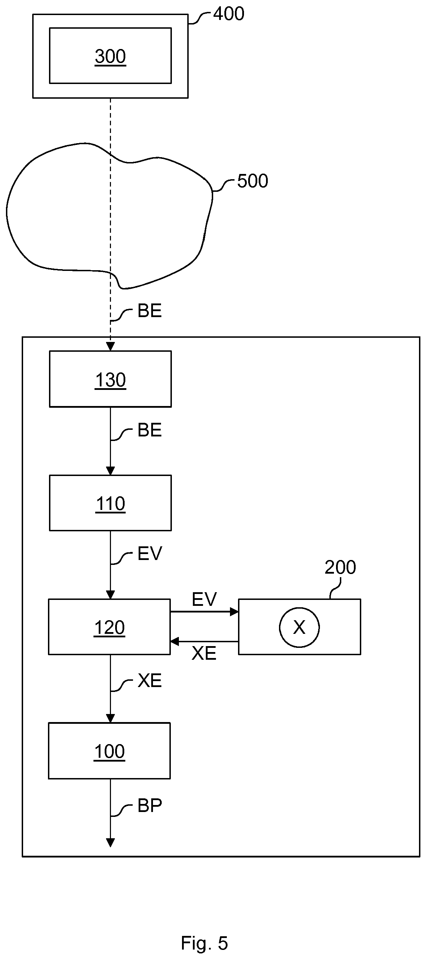

Das Eingabemittel 300 ist dazu eingerichtet, eine Benutzereingabe BE zum Ändern zumindest eines der Programm-Parameter RI, TI, PD zu erfassen. In dem Beispiel der Fig. 1 bis 4 ist das Eingabemittel 300 Teil der Haushaltsgeschirrspülmaschine 1. Mit Bezug zu der Fig. 5 wird ein weiteres Ausführungsbeispiel erläutert werden, bei welchem das Eingabemittel 300 extern zu der Haushaltsgeschirrspülmaschine 1 ist.

Die Auswahl-Einheit 110 ist dazu eingerichtet, einen der bestimmten N-dimensionalen Eingangsvektoren EV in Abhängigkeit der erfassten Benutzereingabe BE auszuwählen.

Mit N = 3 ist der Eingangsvektor EV ein dreidimensionaler Eingangsvektor mit drei Vektorkomponenten. Eine jede der Vektorkomponenten des Eingangsvektors EV ist auf eine der drei Dimensionen der Matrix X der Fig. 3 bezogen. Beispielsweise ist die erste Vektorkomponente des Eingangsvektors EV auf die x-Achse der Matrix X bezogen, die zweite Vektorkomponente des Eingangsvektors EV ist auf die y-Achse der Matrix X bezogen und die dritte Vektorkomponente ist auf die z-Achse der Matrix X bezogen.

In diesem Beispiel gibt es demnach auch 64 verschiedene bestimmte Eingangsvektoren EV, die mittels der Auswahl-Einheit 110 ausgewählt werden können.

Ist beispielsweise der Eingangsvektor EV(RI, PD, TI) = (3, 1, 1) zu einem bestimmten Zeitpunkt, so bedeutet dies, dass die Reinigungs-Intensität auf 3 eingestellt ist, die Programm-Dauer auf 1 eingestellt ist und die Trocknungs-Intensität auf 1 eingestellt ist. Ändert der Benutzer dann mittels einer Benutzereingabe BE den Eingangsvektor EV(RI, PD, TI) auf (4, 1, 1), so hat er die Reinigungs-Intensität RI mittels seiner Benutzereingabe BE um 1 erhöht (von 3 auf 4). Die erfasste Benutzereingabe BE wird von dem Eingabemittel 300 an die Auswahl-Einheit 110 übergeben. Die Auswahl-Einheit 110 wählt dann den dreidimensionalen Eingangsvektor EV(RI, PD, TI) = (4, 1, 1) aus und übergibt diesen an die Ermittlungs-Einheit 120.

Die Ermittlungs-Einheit 120 ermittelt ein Matrixelement XE aus der Matrix X mittels des ausgewählten Eingangsvektors EV(RI, PD, TI) = (4, 1, 1). Das ermittelte Matrixelement XE ist in der Fig. 3 mit dem Bezugszeichen XE versehen.

Das ermittelte Matrixelement XE wird dann von der Ermittlungs-Einheit 120 der Steuerungsvorrichtung 100 derart übergeben, dass dieses dazu eingerichtet ist, das dem ermittelten Matrixelement XE zugeordnete Behandlungsprogramm BP durchzuführen.

Des Weiteren zeigt die Fig. 4 eine schematische Ansicht eines Eingabemittels 300 zum Erfassen der Benutzereingaben BE der Haushaltsgeschirrspülmaschine 1 nach Fig. 1.

Gemäß dem Beispiel der Fig. 4 umfasst das Eingabemittel 300 N, mit N = 3, unterschiedliche Drehschalter 301, 302, 303. Mit dem Drehschalter 301 kann der Benutzer die vier Stufen der Reinigungs-Intensität RI wählen. Entsprechend kann der Benutzer mit den vier Einstellmöglichkeiten des Drehschalters 302 die vier Stufen der Trocknungs-Intensität TI wählen und mit dem Drehschalter 303 die vier Stufen der Programm-Dauer PD wählen. Die Programm-Dauer PD kann auch als Geschwindigkeit oder Programm-Geschwindigkeit bezeichnet werden.

Die Drehschalter 301, 302, 303 der Fig. 4 stellen Beispiele für haptische Eingabe-Einrichtungen zur Änderung der Programm-Parameter RI, TI, PD dar. Ein weiteres Beispiel für haptische Eingabe-Einrichtungen sind Schieberegler.

Des Weiteren ist es auch möglich, dass das Eingabemittel 300 ein berührungsempfindliches Display aufweist, welches beispielsweise - wie in Fig. 1 gezeigt - an der Außenseite der Tür 3 angeordnet ist. Das berührungsempfindliche Display ist dazu eingerichtet, ein Feedback des Benutzers in Form von Display-Eingaben als Antworten des Benutzers auf von dem Display ausgegebene Fragen zu erfassen. Für das oben erwähnte Beispiel der Änderung des Programm-Parameters RI kann eine solche Frage an den Benutzer sein: "Wollen Sie eine Erhöhung der Reinigungs-Intensität?". Dem Benutzer werden dann noch über das berührungsempfindliche Display zwei Eingabefelder bereitgestellt, einmal das Eingabefeld mit "Ja" und einmal das Eingabefeld mit "Nein". In dem oben dargestellten Beispiel hat dann der Benutzer das Eingabefeld "Ja" getätigt, so dass der Eingabevektor EV(RI, PD, TI) = (4, 1, 1) ausgewählt wird.

Bei einer von dem Eingabemittel 300 erfassten Benutzereingabe BE zur Änderung eines der Programm-Parameter RI, TI, PD außerhalb des bestimmten Wertebereichs ermittelt die Steuerungsvorrichtung 100 eine Maßnahme und triggert oder veranlasst die Durchführung der ermittelten Maßnahme. Wenn beispielsweise der Wertebereich für die Reinigungs-Intensität RI wie in oben aufgeführtem Beispiel [1, 2, 3, 4] ist und der Benutzer aber mittels Sprach-Eingabe für die Reinigungs-Intensität RI den Wert 5 nennt, so liegt seine Benutzereingabe BE zur Änderung des Programm-Parameters Reinigungs-Intensität RI außerhalb des bestimmten Wertebereichs von [1, 2, 3, 4] vor. Eine geeignete Maßnahme kann dann sein, bestimmte Betriebs-Parameter zur Verbesserung der Reinigungs-Intensität, wie beispielsweise die Spülflottentemperatur anzupassen.

Ferner zeigt die Fig. 5 eine schematische perspektivische Ansicht eines weiteren Ausführungsbeispiels eines Systems mit einer Haushaltsgeschirrspülmaschine 1. Das weitere Ausführungsbeispiel der Fig. 5 unterscheidet sich von dem Ausführungsbeispiel nach Fig. 1 und 2 dahingehend, dass das Eingabemittel 300 extern zu der Haushaltsgeschirrspülmaschine 1 angeordnet ist. In dem Beispiel der Fig. 5 ist das Eingabemittel 300 als eine App ausgebildet, welche auf einer externen Einrichtung 400, beispielsweise auf einem Smartphone oder auf einem Tablet, installiert ist und auf dieser betrieben wird.

Der Benutzer kann dann mittels der App 300 die Benutzereingabe BE eingeben, und mittels der App 300 wird die erfasste Benutzereingabe BE über ein Netzwerk 500, beispielsweise das Internet oder ein Intranet, an die Haushaltsgeschirrspülmaschine 1 übertragen. Zur Kommunikation mit der externen Einrichtung 400 umfasst die Haushaltsgeschirrspülmaschine 1 eine Kommunikations-Einheit 130. In dem Beispiel der Fig. 5 empfängt die Kommunikations-Einheit 130 die erfasste Benutzereingabe BE und leitet die empfangene Benutzereingabe BE an die Auswahl-Einheit 110 weiter.

Die App 300 kann beispielsweise auch ein Sprachdialogsystem auf der externen Einrichtung 400 ausbilden. Das Sprachdialogsystem ist insbesondere dazu eingerichtet, ein Feedback des Benutzers in Form von Sprach-Eingaben als Antworten des Benutzers auf von dem Sprachdialogsystem generierten Sprach-Ausgaben als Fragen zu erfassen. Beispielsweise kann das Sprachdialogsystem den Benutzer fragen, ob er eine verkürzte Programm-Dauer wünscht. Mittels einer Sprach-Eingabe kann dann der Benutzer dem Sprachdialogsystem antworten, dass er eine verkürzte Programm-Dauer wünscht, was ein Inkrementieren der Vektorkomponente für die Programm-Dauer PD in dem Eingangsvektor EV bedingt.

Die weiteren Funktionalitäten der Ermittlungs-Einheit 120, der Speicher-Einrichtung 200 und der Steuerungsvorrichtung100 sind gemäß dem Beispiel der Fig. 2.

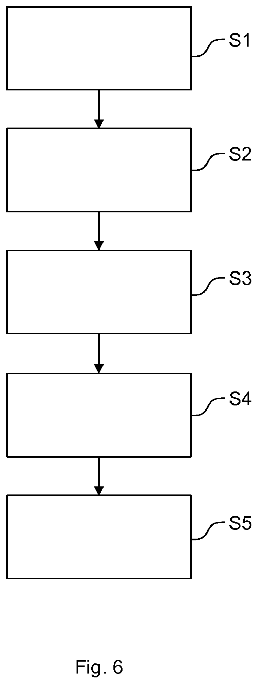

Fig. 6 zeigt ein schematisches Blockschaltbild eines Verfahrens zum Betreiben einer Haushaltsgeschirrspülmaschine 1, wie beispielsweise der Haushaltsgeschirrspülmaschine 1 der Fig. 1 oder Fig. 5. Das Verfahren der Fig. 6 umfasst die Schritt S1 bis S5:
In Schritt S1 wird eine Anzahl M von Behandlungsprogrammen BP in Form einer N-dimensionalen Matrix X in einer Speichereinrichtung 200 gespeichert. Dabei wird einem jeden Matrixelement XE der Matrix X eines der M Behandlungsprogramme BP zugeordnet. Das jeweilige Matrixelement XE ist durch einen bestimmten N-dimensionalen Eingangsvektor EV ermittelbar.

In Schritt S2 wird eine Benutzereingabe BE zur Änderung zumindest eines der Programm-Parameter RI, TI, PD erfasst.

In Schritt S3 wird einer der bestimmten N-dimensionalen Eingangsvektoren EV in Abhängigkeit der erfassten Benutzereingabe BE ausgewählt.

In Schritt S4 wird ein Matrixelement XE aus der Matrix X mittels des ausgewählten Eingangsvektors EV ermittelt.

In Schritt S5 wird das dem ermittelten Matrix-Element ME zugeordnete Behandlungsprogramm BP mittels der Steuerungsvorrichtung 100 durchgeführt.

Obwohl die vorliegende Erfindung anhand von Ausführungsbeispielen beschrieben wurde, ist sie vielfältig modifizierbar.

### Verwendete Bezugszeichen:

- 1: Haushaltsgeschirrspülmaschine
- 2: Spülbehälter
- 3: Tür
- 4: Spülkammer
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 100: Steuerungsvorrichtung
- 110: Auswahl-Einheit
- 120: Ermittlungs-Einheit
- 130: Kommunikations-Einheit
- 200: Speichereinrichtung
- 300: Eingabemittel
- 301: Drehregler
- 302: Drehregler
- 303: Drehregler
- 400: externe Einrichtung
- 500: Netzwerk

- A: Auszugsrichtung
- BE: Benutzereingabe
- BP: Behandlungsprogramm
- E: Einschubrichtung
- EV: Eingangsvektor
- PD: Programm-Dauer
- RI: Reinigungs-Intensität
- TE: Trocknungs-Intensität
- S1: Verfahrensschritt
- S2: Verfahrensschritt
- S3: Verfahrensschritt
- S4: Verfahrensschritt
- S5: Verfahrensschritt
- X: Matrix
- XE: Matrixelement

## Patentansprüche

1. System mit einer Geschirrspülmaschine (1), mit
einer Steuerungsvorrichtung (100) zum Durchführen eines Behandlungsprogramms (BP) aus einer Mehrzahl M von Behandlungsprogrammen (BP), wobei jedes der Behandlungsprogramme (BP) durch eine Anzahl von Programm-Parametern (RI, TI, PD) bestimmt ist,
einer Speichereinrichtung (200) zum Speichern der M Behandlungsprogramme (BP) in Form einer N-dimensionalen Matrix, wobei einem jeden Matrixelement (XE) der Matrix (X) eines der M Behandlungsprogramme (BP) zugeordnet ist, wobei das jeweilige Matrixelement (XE) durch einen aus einer Mehrzahl von bestimmten N-dimensionalen Eingangsvektoren (EV) ermittelbar ist,
einem Eingabemittel (300) zum Erfassen einer Benutzereingabe (BE) zum Ändern zumindest eines der Programm-Parameter (RI, TI, PD),
eine Auswahl-Einheit (110) zum Auswählen eines der bestimmten N-dimensionalen Eingangsvektoren (EV) in Abhängigkeit der erfassten Benutzereingabe (BE), wobei die Anzahl der einstellbaren Programm-Parameter (RI, TI, PD) N ist, wobei der N-dimensionale Eingangsvektor (EV) N Vektorkomponenten aufweist, wobei die jeweilige Vektorkomponente des Eingangsvektors (EV) auf eine der N-Dimensionen der Matrix (X) bezogen ist, und
eine Ermittlungs-Einheit (120) zum Ermitteln eines Matrixelements (XE) aus der Matrix (X) mittels des ausgewählten Eingangsvektors (EV), wobei die Matrix (X) eine dreidimensionale (x×y×z)-Matrix ist, mit N = 3, wobei x, y und z diskrete Werte sind und die Anzahl M der Behandlungsprogramme (BP) einem Produkt aus x, y und z entspricht,
wobei die Steuerungsvorrichtung (100) dazu eingerichtet ist, das dem ermittelten Matrix-Element (XE) zugeordnete Behandlungsprogramm (BP) durchzuführen.

2. System nach Anspruch 1, wobei die durch den Benutzer einstellbaren Programm-Parameter (RI, TI, PD) eine Reinigungs-Intensität (RI), eine Trocknungs-Intensität (TI) und/oder eine Programm-Dauer (PD) umfassen.

3. System nach Anspruch 1, wobei x einen Wertebereich einer ersten Vektorkomponente des Eingangsvektors (EV) bestimmt, y einen Wertebereich einer zweiten Vektorkomponente des Eingangsvektors (EV) bestimmt und z einen Wertebereich einer dritten Vektorkomponente des Eingangsvektors (EV) bestimmt.

4. System nach Anspruch 3, wobei die Steuerungsvorrichtung (100) dazu eingerichtet ist, bei einer von dem Eingabemittel (300) erfassten Benutzereingabe (BE) zur Änderung eines der Programm-Parameter (RI, TI, PD) außerhalb des bestimmten Wertebereichs eine Maßnahme zu ermitteln und die Durchführung der ermittelten Maßnahme zu triggern.

5. System nach einem der Ansprüche 1 bis 4, wobei das Eingabemittel (300) N haptische Eingabe-Einrichtungen (301, 302, 303) aufweist, wobei eine jeweilige der N haptischen Eingabe-Einrichtungen (301, 302, 303) einem der N einstellbaren Programm-Parameter (RI, TI, PD) zugeordnet ist.

6. System nach Anspruch 5, wobei die jeweilige haptische Eingabe-Einrichtung (301, 302, 303) einen Drehschalter oder einen Schieberegler aufweist.

7. System nach einem der Ansprüche 1 bis 4, wobei das Eingabemittel (300) dazu eingerichtet ist, ein Feedback des Benutzers nach Ablauf eines der Behandlungsprogramme (BP) zu erfassen und zumindest einen der Programm-Parameter (RI, TI, PD) in Abhängigkeit des erfassten Feedbacks zu ändern.

8. System nach Anspruch 7, wobei das Eingabemittel (300) ein Sprachdialogsystem aufweist, welches dazu eingerichtet ist, das Feedback des Benutzers in Form von Sprach-Eingaben als Antworten des Benutzers auf von dem Sprachdialogsystem generierten Sprach-Ausgaben als Fragen zu erfassen.

9. System nach Anspruch 7, wobei das Eingabemittel (300) ein berührungsempfindliches Display aufweist, welches dazu eingerichtet ist, das Feedback des Benutzers in Form von Display-Eingaben als Antworten des Benutzers auf von dem Display ausgegebenen Fragen zu erfassen.

10. System nach einem der Ansprüche 1 bis 9, wobei die Geschirrspülmaschine (1) das Eingabemittel (300) integriert.

11. System nach einem der Ansprüche 1 bis 9, wobei das Eingabemittel (300) als eine auf einer externen Einrichtung (400) installierbare App ausgebildet ist.

12. Verfahren zum Betreiben einer Geschirrspülmaschine (1), mit einer Steuerungsvorrichtung (100) zum Durchführen eines Behandlungsprogramms (BP) aus einer Mehrzahl M von Behandlungsprogrammen (BP), wobei jedes der Behandlungsprogramme (BP) durch eine Anzahl von Programm-Parametern (RI, TI, PD) bestimmt ist, mit:
Speichern (S1) der M Behandlungsprogramme (BP) in Form einer N-dimensionalen Matrix (X) in einer Speichereinrichtung (200), wobei einem jeden Matrixelement (XE) der Matrix (X) eines der M Behandlungsprogramme (BP) zugeordnet wird, wobei das jeweilige Matrixelement (XE) durch einen aus einer Mehrzahl von bestimmten N-dimensionalen Eingangsvektoren (EV) ermittelbar ist, und
Erfassen (S2) einer Benutzereingabe (BE) zum Ändern zumindest eines der Programm-Parameter (RI, TI, PD), **gekennzeichnet durch**
Auswählen (S3) eines der bestimmten N-dimensionalen Eingangsvektoren (EV) in Abhängigkeit der erfassten Benutzereingabe (BE), wobei die Anzahl der einstellbaren Programm-Parameter (RI, TI, PD) N ist, wobei der N-dimensionale Eingangsvektor (EV) N Vektorkomponenten aufweist, wobei die jeweilige Vektorkomponente des Eingangsvektors (EV) auf eine der N-Dimensionen der Matrix (X) bezogen ist,
Ermitteln (S4) eines Matrixelements (XE) aus der Matrix (X) mittels des ausgewählten Eingangsvektors (EV), wobei die Matrix (X) eine dreidimensionale (x×y×z)-Matrix ist, mit N = 3, wobei x, y und z diskrete Werte sind und die Anzahl M der Behandlungsprogramme (BP) einem Produkt aus x, y und z entspricht, und
Durchführen (S5) des dem ermittelten Matrix-Element (XE) zugeordneten Behandlungsprogramms (BP) mittels der Steuerungsvorrichtung (100).

13. Computerprogrammprodukt, welches auf einer programmgesteuerten Einrichtung die Durchführung des Verfahrens nach Anspruch 12 veranlasst.

## Claims

1. System with a dishwasher (1), with
a controller apparatus (100) for carrying out one treatment program (BP) from a plurality M of treatment programs (BP), wherein each of the treatment programs (BP) is defined by a number of program parameters (RI, TI, PD),
a memory device (200) for storing the M treatment programs (BP) in the form of an N-dimensional matrix, wherein one of the M treatment programs (BP) is associated in each case with a matrix element (XE) of the matrix (X), wherein the respective matrix element (XE) can be determined by means of one of a plurality of defined N-dimensional input vectors (EV),
an input means (300) for capturing a user input (BE) to change at least one of the program parameters (RI, TI, PD),
a selection unit (110) for selecting one of the defined N-dimensional input vectors (EV) as a function of the captured user input (BE), wherein the number of program parameters (RI, TI, PD) that can be adjusted is N, wherein the N-dimensional input vector (EV) has N vector components, wherein the respective vector component of the input vector (EV) relates to one of the N-dimensions of the matrix (X), and
a determining unit (120) for determining one matrix element (XE) from the matrix (X) by means of the selected input vector (EV), wherein the matrix (X) is a three-dimensional (x × y × z) matrix, where N = 3, where x, y and z are discrete values and the number M of treatment programs (BP) corresponds to a product of x, y and z,
wherein the controller apparatus (100) is configured to carry out the treatment program (BP) associated with the determined matrix element (XE).

2. System according to claim 1, wherein the program parameters (RI, TI, PD) which can be adjusted by the user comprise a cleaning intensity (RI), a drying intensity (TI) and/or a program duration (PD).

3. System according to claim 1, wherein x defines a value range of a first vector component of the input vector (EV), y defines a value range of a second vector component of the input vector (EV), and z defines a value range of a third vector component of the input vector (EV).

4. System according to claim 3, wherein the controller apparatus (100) is configured, in response to a user input (BE) captured by the input means (300) to change one of the program parameters (RI, TI, PD) outside the defined value range, to determine a measure and to trigger the execution of the determined measure.

5. System according to one of claims 1 to 4, wherein the input means (300) has N haptic input devices (301, 302, 303), wherein each of the N haptic input devices (301, 302, 303) is associated with one of the N adjustable program parameters (RI, TI, PD).

6. System according to claim 5, wherein the respective haptic input device (301, 302, 303) has a rotary dial or a slide control.

7. System according to one of claims 1 to 4, wherein the input means (300) is configured to capture an item of feedback of the user after completion of one of the treatment programs (BP) and to change at least one of the program parameters (RI, TI, PD) as a function of the captured feedback.

8. System according to claim 7, wherein the input means (300) has a voice dialog system, which is configured to capture the user's feedback in the form of voice inputs as the user's responses to voice outputs generated as questions by the voice dialog system.

9. System according to claim 7, wherein the input means (300) has a touch-sensitive display, which is configured to capture the user's feedback in the form of display inputs as the user's responses to questions output by the display.

10. System according to one of claims 1 to 9, wherein the input means (300) is integrated in the dishwasher (1).

11. System according to one of claims 1 to 9, wherein the input means (300) is embodied as an app which can be installed on an external device (400).

12. Method for operating a dishwasher (1), with a controller apparatus (100) for carrying out one treatment program (BP) from a plurality M of treatment programs (BP), wherein each of the treatment programs (BP) is defined by a number of program parameters (RI, TI, PD), with the steps:
storing (S1) the M treatment programs (BP) in the form of an N-dimensional matrix (X) in a memory device (200), wherein one of the M treatment programs (BP) is associated in each case with a matrix element (XE) of the matrix (X), wherein the respective matrix element (XE) can be determined by means of one of a plurality of defined N-dimensional input vectors (EV),
capturing (S2) a user input (BE) to change at least one of the program parameters (RI, TI, PD), **characterised by**
selecting (S3) one of the defined N-dimensional input vectors (EV) as a function of the captured user input (BE), wherein the number of program parameters (RI, TI, PD) that can be adjusted is N, wherein the N-dimensional input vector (EV) has N vector components, wherein the respective vector component of the input vector (EV) relates to one of the N-dimensions of the matrix (X), and
determining (S4) a matrix element (XE) from the matrix (X) by means of the selected input vector (EV), wherein the matrix (X) is a three-dimensional (x × y × z) matrix, where N = 3, where x, y and z are discrete values and the number M of treatment programs (BP) corresponds to a product of x, y and z, and
carrying out (S5) the treatment program (BP) associated with the determined matrix element (XE) by means of the controller apparatus (100).

13. Computer program product which initiates the execution of the method according to claim 12 on a program-controlled device.

## Revendications

1. Système avec un lave-vaisselle (1), avec
un dispositif de commande (100) pour l'exécution d'un programme de traitement (BP) parmi une pluralité M de programmes de traitement (BP), dans lequel chacun des programmes de traitement (BP) est établi par un nombre de paramètres de programme (RI, TI, PD),
un dispositif d'enregistrement (200) pour l'enregistrement des M programmes de traitement (BP) sous la forme d'une matrice à N dimensions, dans lequel l'un des M programmes de traitement (BP) est affecté à chaque élément matriciel (XE) de la matrice (X), dans lequel l'élément matriciel respectif (XE) peut être déterminé par un parmi une pluralité de vecteurs d'entrée (EV) à N dimensions établis,
un moyen d'entrée (300) pour la saisie d'une entrée d'utilisateur (BE) pour la modification d'au moins l'un des paramètres de programme (RI, TI, PD),
une unité de sélection (110) pour la sélection de l'un des vecteurs d'entrée (EV) à N dimensions établis en fonction de l'entrée d'utilisateur (BE) saisie, dans lequel le nombre des paramètres de programme (RI, TI, PD) réglables est N, dans lequel le vecteur d'entrée (EV) à N dimensions présente N composantes vectorielles, dans lequel la composante vectorielle respective du vecteur d'entrée (EV) se rapporte à l'une des N dimensions de la matrice (X), et
une unité de détermination (120) pour la détermination d'un élément matriciel (XE) au départ de la matrice (X) au moyen du vecteur d'entrée sélectionné (EV), dans lequel la matrice (X) est une matrice (x × y × z) tridimensionnelle, où N = 3, dans lequel x, y et z sont des valeurs discrètes et le nombre M des programmes de traitement (BP) correspond à un produit de x, y et z,
dans lequel le dispositif de commande (100) est aménagé pour exécuter le programme de traitement (BP) affecté à l'élément matriciel (XE) déterminé.

2. Système selon la revendication 1, dans lequel les paramètres de programme (RI, TI, PD) réglables par l'utilisateur comprennent une intensité de nettoyage (RI), une intensité de séchage (TI) et/ou une durée de programme (PD).

3. Système selon la revendication 1, dans lequel x établit une plage de valeurs d'une première composante vectorielle du vecteur d'entrée (EV), y établit une plage de valeurs d'une deuxième composante vectorielle du vecteur d'entrée (EV) et z établit une plage de valeurs d'une troisième composante vectorielle du vecteur d'entrée (EV).

4. Système selon la revendication 3, dans lequel le dispositif de commande (100) est aménagé pour déterminer une mesure, en présence d'une entrée d'utilisateur (BE) saisie par le moyen d'entrée (300) pour la modification de l'un des paramètres de programme (RI, TI, PD) en dehors de la plage de valeurs établie, et déclencher l'exécution de la mesure déterminée.

5. Système selon l'une des revendications 1 à 4, dans lequel le moyen d'entrée (300) présente N dispositifs d'entrée haptiques (301, 302, 303), dans lequel un respectif des N dispositifs d'entrée haptiques (301, 302, 303) est affecté à l'un des N paramètres de programme (RI, TI, PD) réglables.

6. Système selon la revendication 5, dans lequel le dispositif d'entrée haptique (301, 302, 303) respectif présente un commutateur rotatif ou un curseur.

7. Système selon l'une des revendications 1 à 4, dans lequel le moyen d'entrée (300) est aménagé pour saisir un feedback de l'utilisateur après le déroulement de l'un des programmes de traitement (BP) et pour modifier au moins l'un des paramètres de programme (RI, TI, PD) en fonction du feedback saisi.

8. Système selon la revendication 7, dans lequel le moyen d'entrée (300) présente un système de dialogue vocal, lequel est aménagé pour saisir le feedback de l'utilisateur sous la forme d'entrées vocales comme réponses de l'utilisateur à des sorties vocales générées sous forme de questions par le système de dialogue vocal.

9. Système selon la revendication 7, dans lequel le moyen d'entrée (300) présente un écran tactile, lequel est aménagé pour saisir le feedback de l'utilisateur sous la forme d'entrées sur écran comme réponses de l'utilisateur à des questions émises par l'écran.

10. Système selon l'une des revendications 1 à 9, dans lequel le lave-vaisselle (1) intègre le moyen d'entrée (300).

11. Système selon l'une des revendications 1 à 9, dans lequel le moyen d'entrée (300) est formé sous la forme d'une application pouvant être installée sur un dispositif externe (400).

12. Procédé d'exploitation d'un lave-vaisselle (1), avec un dispositif de commande (100) pour l'exécution d'un programme de traitement (BP) parmi une pluralité M de programmes de traitement (BP), dans lequel chacun des programmes de traitement (BP) est établi par un nombre de paramètres de programme (RI, TI, PD), avec :
l'enregistrement (S1) des M programmes de traitement (BP) sous la forme d'une matrice (X) à N dimensions dans un dispositif d'enregistrement (200), dans lequel l'un des M programmes de traitement (BP) est affecté à chaque élément matriciel (XE) de la matrice (X), dans lequel l'élément matriciel respectif (XE) peut être déterminé par un parmi une pluralité de vecteurs d'entrée (EV) à N dimensions établis, et
la saisie (S2) d'une entrée d'utilisateur (BE) pour la modification d'au moins l'un des paramètres de programme (RI, TI, PD), **caractérisé par**
la sélection (S3) de l'un des vecteurs d'entrée (EV) à N dimensions établis en fonction de l'entrée d'utilisateur (BE) saisie, dans lequel le nombre des paramètres de programme (RI, TI, PD) réglables est N, dans lequel le vecteur d'entrée (EV) à N dimensions présente N composantes vectorielles, dans lequel la composante vectorielle respective du vecteur d'entrée (EV) se rapporte à l'une des N dimensions de la matrice (X),
la détermination (S4) d'un élément matriciel (XE) au départ de la matrice (X) au moyen du vecteur d'entrée sélectionné (EV), dans lequel la matrice (X) est une matrice (x × y × z) tridimensionnelle, où N = 3, dans lequel x, y et z sont des valeurs discrètes et le nombre M des programmes de traitement (BP) correspond à un produit de x, y et z, et
l'exécution (S5) du programme de traitement (BP) affecté à l'élément matriciel (XE) déterminé, au moyen du dispositif de commande (100).

13. Produit de programme informatique qui, sur un dispositif commandé par programme, provoque l'exécution du procédé selon la revendication 12.
